# EUROPEAN PATENT APPLICATION

(11) **EP 4 001 246 A1**
(43) Date of publication of application: **25.05.2022**
(21) Application number: 20209056.9
(22) Date of filing: 20.11.2020
(51) Int. Cl.: C05D 9/00, C05F 5/00

(54) **VINASSE CONTAINING FERTILIZER**

(71) Applicant: Clariant Produkte (Deutschland) GmbH, 65929 Frankfurt am Main (DE)
(72) Inventor: WALSBERGER, Markus, 94327 Bogen (DE); HOPPE, Thomas, 84034 Landshut (DE); MARCKMANN, Henning, 86807 Buchloe (DE)
(74) Representative: Graser, Konstanze

(57) **Abstract**

The present invention relates to a solid vinasse containing fertilizer product, a method for the production and use of this product in agriculture.

## Description

The present invention relates to a solid vinasse containing fertilizer product, a method for the production and use of this product in agriculture.

With the increase of interest in sustainable energy production methods such as the production of biofuels from organic biomass, a waste product of such processes comes more and more into focus: The so called "vinasse". Vinasse is a residue from ethanol fermentation of the hydrolyzed biomass material such as straw, bagasse or other lignocellulosic materials. It contains several nutritive salts which can contribute to crop growth and organic substances supporting humus formation. However, the components, quantity and quality of vinasse depends on the process of (biofuel) production. Within the state of the art, vinasse is rarely used in pure form because further nutritive components are needed to produce fertilizer which fulfills the requirements of modern agriculture. Therefore, the natural product vinasse has to be enriched by the addition of artificial mineral fertilizer components. A further drawback is the fact that the waste product vinasse - being a liquid product - still contains significant quantities of water and shows a sticky consistency. Both of these drawbacks diminish the use of vinasse as a commercially interesting fertilizer product.

The inventors of the present invention have therefore set themselves the task to develop a process for the production of a high quality vinasse containing fertilizer which can be used as a natural fertilizer in agriculture without the need of additional components. In addition, the inventors of the present invention have set themselves the task to develop a solid composition and process for the production of the solid composition to be used as fertilizer in agriculture overcoming the known deficiencies.

The problems underlying the present invention have been solved as defined by the claims of the present invention.

Within a first aspect of the present invention the invention relates to solid fertilizer containing from 5 to 75 wt.-% vinasse, from 5 to 75 wt.-% lignin and from 5 to 50 wt.-% ash, wherein the ratio of vinasse to lignin to ash is selected from the range of from [2 (vinasse): 1 (lignin) : 0.5 (ash)] to [1 (vinasse): 2 (lignin) : 1 (ash)], wherein the total amount of vinasse, lignin and ash is between 50 to 100 wt.-%.

The inventive fertilizer product shows due to the high content of the specific vinasse component a complete set of nutrient elements, is able to improve soil structure by keeping the soil soft and easy to cultivate, increases the soil pore properties and strengthens the moisture holding capacities. It is further neither harmful to plants, environment nor human and animal health.

It has been surprisingly found that vinasse resulting from this process shows a high quality profile of salts and organic substances which do not require further additions to provide a high quality agricultural fertilizer product. Further, the production process of the vinasse does not incorporate the use of harmful chemicals which would contaminate the vinasse product and eventually render its potential as an organic bio fertilizer moot. In addition, the vinasse resulting from this process can be transformed into a solid product by a simplified process without the need of elaborate processing technology treatment.

Within the present inventio the term "solid fertilizer product" refers to any kind of solid fertilizer product known to a person skilled in the art such as but not limited to an extrudate or pellet. Solid fertilizer products have several advantages and are generally preferred by farmers. The use of fertilizers in solid form enables a simple deposition and also a correct batching of the fertilizer to be distributed on the farmland so that an operator can, in dependence of the type of treatment, set the most suitable composition and deposit the fertilizer where it is required and with the suitable quantities. Further, storage of dry fertilizer is less-space consuming and longterm storage within common silos is possible. The use of solid fertilizers further enables to apply with high accuracy the fertilizer in the desired area: so that it is possible to markedly reduce the quantity of fertilizer used in comparison, for example, with a fertilization performed by liquid compositions.

In case the solid fertilizer is in form of a pellet, any pelleting process known to a person skilled in the art as suitable for the production of fertilizer pellets can be applied. For example, the vinasse can be supplied to a pelletizer adapted to form said pellets on a conveyor belt. Then, the liquid (or semi-liquid) pellets are cooled down so that they can be supplied in a solid state ready for their use. Examples of processes for manufacturing fertilizers in pellet form are described in the following documents: US 7700012 B2, WO 2012007331 A1, US 20070131381 A1, US 20100288005 A1. These documents describe processes for manufacturing fertilizers in pellet form by using a fertilizing substance in a liquid state which is mixed one or more times with powdery additives. The mixture is then supplied to a pelletizer which deposits a predetermined quantity of the mixed material on a conveyor belt. The pellets in a liquid or semi-solid state are cooled down on the belt so that they can be then handled and packaged.

The term "vinasse" is known to a person skilled in the art and refers to byproducts of the sugar or bioethanol industry and originates from biomasses such as sugarbeet, sugar cane, straw, wood and other cellulosic substrates. The latter are further processed by fermentation to ethanol, ascorbic acid or other products. After the removal of the desired product (alcohol, ascorbic acid, etc.) the remaining material is called vinasse. Vinasse usually has a viscosity comparable to molasses and a sticky consistency.

The term "lignin" is known to a person skilled in the art and refers to a complex organic polymers which are key elements of the support tissues of vascular plants and some algae. Lignins are a major part of plant cell walls and respective biomasses such as wood and any part thereof, straw, stover, husks and hulls of cereals but also originating from sugarcane, sugarbeet, corn, winter wheat, barley, cotton, oil palms, miscanthus, canola, sun flowers and rice. Chemically, lignins are cross-linked phenolic polymers. Within the scope of the present invention lignin can be used as such, as the pure chemical compound(s) but also as part of biomass or parts of biomass or as residue of a process for the saccharification of lignocellulosic biomass. Within a particularly suitable embodiment of the inventive fertilizer, the dry matter content of lignin is selected from the range of from 35 to 65 wt.-%, preferably from 37 to 60 wt.-%, further preferred from 40 to 58 wt.-%, also preferred from 42 to 55 wt.-% and most preferred from 45 to 52 wt.-%.

The term "ash" as used within the present invention refers to any kind of ash originating from the combustion of lignocellulosic biomasses such as but not limited to wood, straw, hay or lignin as such, e.g. lignin resulting from a process for the production of bioethanol. Processes for the production of bioethanol are known to a person skilled in the art and consist of a variety of production steps starting with the mechanical and/or chemical comminution of the raw biomass material, hydrolysis of the comminuted material by hydrase enzymes or chemically, fermentation of the resulting mono- and disaccharides to ethanol or other organic compounds such as ascorbic acid, lactic acid or other. Within a preferred embodiment the ash contains one or more compounds selected from the group consisting of Ca, Mg, K, lime, Fe and P.

Within a preferred embodiment of the present invention the vinasse, the lignin and the ash all originate from a process for saccharification of lignocellulosic biomass such as a process for the production of bioethanol as described above. Within a particularly preferred embodiment the vinasse, the lignin and the ash originate from the same process for saccharification of lignocellulosic biomass. In this case, the solid fertilizer is a 100% sustainable product which enables 100% use of all biomass originally used for production, moreover, valuable organic compounds originating from sustainable resources such as wood, straw or other lignocellulosic biomass will be returned to the environmental and contribute to the formation of new biomass material.

Within the present invention, the solid fertilizer contains from 5 to 75 wt.-% vinasse, from 5 to 75 wt.-% lignin and from 5 to 50 wt.-% ash, wherein the ratio of vinasse to lignin to ash is selected from the range of from [2 (vinasse): 1 (lignin) : 0.5 (ash)] to [1 (vinasse): 2 (lignin) : 1 (ash)], wherein the total amount of vinasse, lignin and ash is between 50 to 100 wt.-%. It is thereby understood that a person skilled in the art such as a process engineer, especially a process engineer in the field of biomass processing technology is capable of selecting the amount of vinasse, lignin and ash within the given range to add up to a total content of from 50 to 100 wt.-%. In case the content of vinasse, ash and lignin is less than 100 wt.-%, the remaining percentages may contain water in an amount of up to 10 wt.-% and/or unprocessed biomass material such as straw and/or additives such as bentonite. It is also within the present invention that the lignin is - at least partly - added as part of raw or mechanically processed biomass.

Within a preferred embodiment the solid fertilizer contains from 10 to 40 wt.-% vinasse and from 10 to 40 wt.-% lignin and from 10 to 40 wt.-% ash, wherein the ratio of vinasse to lignin to ash is selected from the range of from [2 (vinasse): 1 (lignin) : 0.5 (ash)] to [1 (vinasse): 1 (lignin) : 1 (ash)], wherein the total amount of vinasse, lignin and ash is between 50 and 100 wt.-%. Within this embodiment, the amount of vinasse is at least as high as the amount of lignin and ash. However, within some embodiments within this preferred embodiment the amount of ash is lower than the amount of vinasse and the amount of lignin. This embodiment also comprises identical amounts of vinasse, lignin and ash of up to 33 wt.-%. Particularly preferred amounts of vinasse within this preferred embodiment are from 33 wt.-% to 40 wt.-% vinasse within the ratio as given above, such as but not limited to [1 (vinasse) : 1 (lignin) : 0.5 (ash)] to [1 (vinasse) : 1 (lignin) : 1 (ash)].

Within a preferred embodiment the solid fertilizer contains from 10 to 60 wt.-% vinasse and from 10 to 60 wt.-% lignin and from 10 to 40 wt.-% ash, wherein the ratio of vinasse to lignin to ash is selected from the range of from [2 (vinasse): 1 (lignin) : 0.5 (ash)] to [1 (vinasse): 2 (lignin) : 1 (ash)], wherein the total amount of vinasse, lignin and ash is between 50 and 100 wt.-%. Within this preferred embodiment the amount of lignin may be higher than the amount of vinasse. Particularly preferred amounts of vinasse within this preferred embodiment are from 30 to to 45 wt.-% lignin within the ratio as given above, such as but not limited to [2 (vinasse) : 1 (lignin) : 0.5 (ash)] to [1 (vinasse) : 2 (lignin) : 1 (ash)].

Within a preferred embodiment of the present invention the solid fertilizer contains from 2.5 to 10 wt.-% (relative to total solids) total nitrogen, from 0.5 to 5 wt.-% (relative to total solids) phosphorus, from 0.05 to 0.3 wt.% (relative to total solids) MgO, from 5 to 35 mg/kg Mn, from 2 to 30 mg/kg Fe, from 0.05 to 0.4 wt.% (relative to total solids) Ca, and/or from 5 to 10 wt.-% (relative to total solids) K.

Within another preferred embodiment, the solid fertilizer has a pH of from 4 to 7.5, preferably of from 4.5 to 7.

Within another preferred embodiment, the solid fertilizer has a sulfur content below 1 wt.-%, preferably below 0.75 wt.-% and most preferred below 0.6 wt.-% such as a sulfur content between 0.01 and 1 wt.-% or between 0.1 and 0.9 wt.-%.

The present invention also relates to a process for the production of a solid fertilizer as defined above comprising the steps
(i) providing vinasse, lignin and ash in a vessel;
(ii) mixing the vinasse, lignin and ash to a homogenous composition;
(iii) subjecting the composition to a extrudation or pelleting process.

The "provision" according to step (i) can be carried out by any means and measure known to a person skilled in the art as suitable for the inventive purpose. Within a preferred embodiment, the vinasse, lignin and ash are pumped or poured into the vessel.

The vessel can be any vessel know to a person skilled in the art as suitable for the inventive purpose, such as a reactor for example a stirred tank-reactor.

The "mixing" according to step (ii) can be carried out by any means and measures known to a person skilled in the art as suitable for the inventive purpose. Within a preferred embodiment, the "mixing" is carried out within and by a stirred tank-reactor. The mixing is carried out until the vinasse, lignin and ash as well as possible additional components have been transformed into a homogenous composition. Within a preferred embodiment according to the present invention the mixing is carried out for a time period of from 5 minutes to 1 hour, preferably from 10 minutes to 45 minutes and most preferred from 15 minutes to 30 minutes. The mixing is preferably carried out at room temperature whereas a temperature within the range of from 17 to 30 °C is suitable for carrying out the mixing step.

Within a preferred embodiment of the inventive process at least one additional component selected from the group consisting of bentonite, clay lime, wood, wood-based materials, vegetal masses, starch, stubbles, straw and peat is added before or during step (ii). The at least one additional component can be added by any means or measure known to a person skilled in the art.

Within a preferred embodiment, the at least one additional component constitutes up to 50 wt.-% of the final solid fertilizer product, preferably up to 35 wt.-%, particularly preferred the amount of the at least one additional component is selected from the range of from 0.5 to 25 wt.-%, preferably from the range of from 1 to 20 wt.-% and most preferred of from 2 to 15 wt.%.

The extrudation or pelleting process according to step (iii) of the inventive process can be carried out by any extrudation or pelleting process known to a person skilled in the art as suitable for the inventive process and respective composition. Preferably, the composition is subjected to a pelleting process. Such processes are well known within the state of the art. A suitable pelleting process is for example described within EP 3 636 624 A1.

The present invention further relates to a fertilizer produced according to the process as defined above.

Moreover, the present invention relates to the use of the fertilizer product as defined above for fertilizing agricultural crops such as but not limited to crops, corn, vegetables and fruits.

### Specific embodiments of the present invention

The following specific embodiments define embodiments which are particularly advantageous for the inventive method. These embodiments are not meant to limit the scope of the present application in any respect.

### Specific embodiment A

Solid fertilizer containing from 10 to 40 wt.-% vinasse and from 10 to 40 wt.-% lignin and from 10 to 40 wt.-% ash, wherein the ratio of vinasse to lignin to ash is selected from the range of from [2 (vinasse) : 1 (lignin) : 0.5 (ash)] to [1 (vinasse) : 1 (lignin) : 1 (ash)], wherein the total amount of vinasse, lignin and ash is between 50 and 100 wt.-%, wherein the dry matter content of the lignin is selected from the range of from 35 to 65%, preferably of from 40 to 60 % and wherein the solid fertilizer has a pH of from 4 to 7.5.

### Specific embodiment B

Solid fertilizer containing from 10 to 40 wt.-% vinasse and from 10 to 40 wt.-% lignin and from 10 to 40 wt.-% ash, wherein the ratio of vinasse to lignin to ash is selected from the range of from [2 (vinasse) : 1 (lignin) : 0.5 (ash)] to [1 (vinasse) : 1 (lignin) : 1 (ash)], wherein the total amount of vinasse, lignin and ash is between 50 and 100 wt.-%, wherein the dry matter content of the lignin is selected from the range of from 35 to 65%, preferably of from 40 to 60 % and wherein the solid fertilizer has a pH of from 4 to 7.5.

### Specific embodiment C

Solid fertilizer as defined within specific embodiment A or B wherein the ash is ash originating from the combustion of wood and/or lignin.

### Specific embodiment D

Solid fertilizer as defined within specific embodiment A, B or C which contains as an additional component water of up to 10 wt.-%, preferably from 2 to 8 wt.-%.

### Specific embodiment E

Solid fertilizer as defined within any of specific embodiment A to D, wherein the vinasse, the lignin and the ash originate from a process for saccharification of lignocellulosic biomass.

### Specific embodiment F

Solid fertilizer as defined within any of specific embodiment A to E, wherein the sulfur content is below 1 wt.-%, preferably below 0.75 wt.-%.

### Specific embodiment G

Solid fertilizer as defined within any of specific embodiment A to F, wherein the solid fertilizer contains from 2.5 to 10 wt.-% (relative to total solids) total nitrogen, from 0.5 to 5 wt.-% (relative to total solids) phosphorus, from 0.05 to 0.3 wt.% (relative to total solids) MgO, from 5 to 35 mg/kg Mn, from 2 to 30 mg/kg Fe, from 0.05 to 0.4 wt.% (relative to total solids) Ca, and/or from 5 to 10 wt.-% (relative to total solids) K.

### Examples and Figures

The present invention is explained in greater detail below by means of the examples. It is emphasized that the examples illustrate particular embodiments and do not limit the scope of the present application in any way.

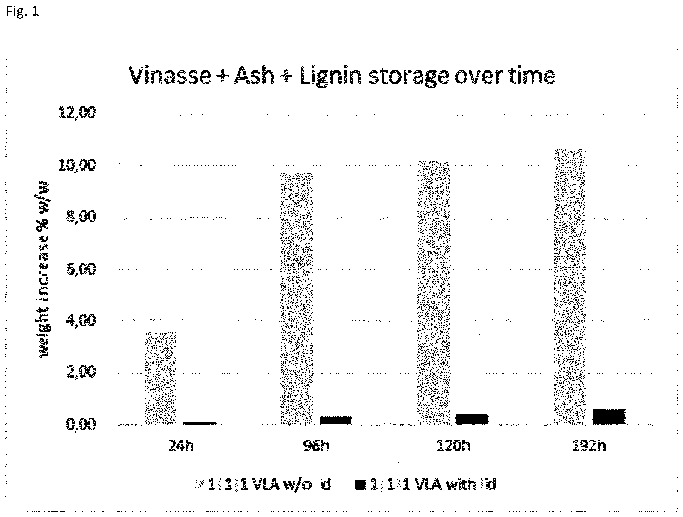

- Fig. 1:: shows the weight increase of the solid fertilizer product according to example 1 after 24h, 96h, 120h and 192 h

### Material and Methods

### List of abbreviations

- xx% d.m.: content referred to dry matter
- xx% OS: content referred to original substance
- CHP: combined heat and power plant
- 2G: second generation
- N: nitrogen
- P: phosphorous
- K: potassium
- m: mass in gramm or kilogram
- g: gramm
- kg: kilogramm

### 1. Determination of dry matter contents of the vinasse, lignin and ash

a. Homogenization of sample
b. Using dry matter balance for measurement
c. Result in %w/w (I)

### 2. Mixing and homogenization

For the mixing of vinasse with lignin and lignin ash the following lab equipment was used:
- 50 mL Falcons / centrifugation tubes
- Ultra Turrax was used for homogenization
- Vinasse was added to the tubes and the ash and lignin is then added in several steps
- For the homogenization an Ultra Turrax was used

### 3. Drying of mix

- Vinasse is applied to aluminium pans for dry weight balances
- Application of 3-4 gramms, distributed in droplets across the pan area
- Equipment: drying cabinet
- Pans are put into a drying cabinet where the mix can be dried constantly with a constant temperature
- Drying was carried of for 3 days at 60°C
- After the drying of the mix the droplets can be removed from the pans

### 4. Characterization of vinasse, lignin, ash and tested solid fertilizer product

### Vinasse

| | |
|---|---|
| Dry matter | 48.6% OS |
| Ash content | 31.5% d.m. |
| Nitrogen | 2.94% d.m. |
| Potassium | 14.4% d.m. (K₂O) |
| Phosphorous | 0.638% d.m. (P₂O₅) |
| Sulfur | 0.41% d.m |

### Ash

| | |
|---|---|
| Dry matter | 48.6% OS |
| Nitrogen | - |
| Potassium | 4.35% d.m. (K₂O) |
| Phosphorous | 1.36% d.m. (P₂O₅) |
| Sulfur | 1.48% d.m. |

### Lignin

| | |
|---|---|
| Dry matter | 65% OS |
| Ash content | 12,6% d.m. |
| Nitrogen | 1.2% d.m. |
| Potassium | 0.46% d.m. (K₂O) |
| Phosphorous | 0.14% d.m. (P₂O₅) |
| Sulfur | 0.16% d.m. |

### Solid fertilizer product

| | |
|---|---|
| Dry matter | 90% OS |
| Nitrogen | 1.37% d.m |
| Potassium | 6.34% d.m |
| Phosphorous | 0.71% d.m |
| Sulfur | 0.68% d.m |

### Example 1

Solid fertilizer product was prepared as described within the material and method section. For testing long term stability solid fertilizer products containing 33 wt.-% vinasse, 33 wt.-% lignin and 33 wt.-% ash from lignin were weighed into centrifugation tubes and stored with and without lid to simulate storage in silos (with lid) and open space storage (without lid) of the fertilizer product.

Weight gain of the solid fertilizer product was measured after 24h, 96h, 120h and 192 h. Weight gain is due to moisture adsorption from the air as vinasse is a highly hydroscopic product.

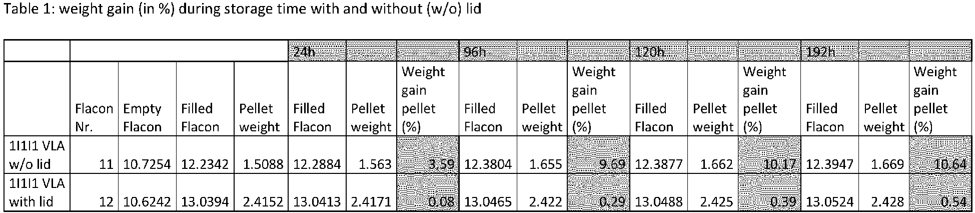

It can be seen from figure 1 that even after storage of 192 hours weight gain was below 11 wt.-% when stored open space. Storage of the solid fertilizer product in containers with lid such as silos was below 1 wt.-% even after 192h of storage. All pellets kept their form and showed no sticky consistency.

## Claims

1. Solid fertilizer containing from 5 to 75 wt.-% vinasse, from 5 to 75 wt.-% lignin and from 5 to 50 wt.-% ash, wherein the ratio of vinasse to lignin to ash is selected from the range of from [2 (vinasse) : 1 (lignin) : 0.5 (ash)] to [1 (vinasse) : 2 (lignin) : 1 (ash)], wherein the total amount of vinasse, lignin and ash is between 50 to 100 wt.-%.

2. Solid fertilizer according to claim 1, containing from 10 to 40 wt.-% vinasse and from 10 to 40 wt.-% lignin and from 10 to 40 wt.-% ash, wherein the ratio of vinasse to lignin to ash is selected from the range of from [2 (vinasse) : 1 (lignin) : 0.5 (ash)] to [ 1 (vinasse) : 1 (lignin) : 1 (ash)], wherein the total amount of vinasse, lignin and ash is between 50 and 100 wt.-%.

3. Solid fertilizer according to claim 1, containing from 10 to 60 wt.-% vinasse and from 10 to 60 wt.-% lignin and from 10 to 40 wt.-% ash, wherein the ratio of vinasse to lignin to ash is selected from the range of from [2 (vinasse): 1 (lignin) : 0.5 (ash)] to [ 1 (vinasse): 2 (lignin) : 1 (ash)], wherein the total amount of vinasse, lignin and ash is between 50 and 100 wt.-%.

4. Solid fertilizer according to any of the foregoing claims, wherein the ash contains one or more compounds selected from the group consisting of Ca, Mg, K, lime, Fe and P.

5. Solid fertilizer according to any of the foregoing claims, containing from x to xx wt.-% total nitrogen, from x to xx wt.-% phosphorus [Mg, Mn, Fe, Ca, K, lime].

6. Solid fertilizer according to any of the foregoing claims, wherein the ash originates from the combustion of lignocellulosic biomass.

7. Solid fertilizer according to any of claims 1 to 5, wherein the ash originates from the combustion of lignin.

8. Solid fertilizer according to any of the foregoing claims, wherein the sulfur content is less than 1 wt.-%.

9. Solid fertilizer according to any of the foregoing claims, wherein the dry matter content of the lignin is selected from the range of from 35 to 65 wt.-%.

10. Solid fertilizer according to any of the foregoing claims, wherein the vinasse, the lignin and the ash originate from a process for saccharification of lignocellulosic biomass.

11. Process for the production of a solid fertilizer as defined in any of claims 1 to 10 comprising the steps
(i) providing vinasse, lignin and ash in a vessel;
(ii) mixing the vinasse, lignin and ash to a homogenous composition;
(iii) subjecting the composition to a extrudation or pelleting process.

12. Process according to claim 11, wherein at least one additional component selected from the group consisting of bentonite, clay lime, wood, wood-based materials, vegetal masses, starch, stubbles, straw and peat is added before or during step (ii).

13. Solid fertilizer produced according to the process as defined in any of claims 11 or 12.

14. Use of the fertilizer product as defined in any of claims 1 to 10 or the solid fertilizer product as defined in claim 13 for fertilizing agricultural crops.
